Europäisches Patentamt

European Patent Office

Office européen des brevets

(11) Numéro de publication: **0 558 862 A1**

## (12) DEMANDE DE BREVET EUROPEEN

(21) Numéro de dépôt: 92403449.9

(22) Date de dépôt: 17.12.92

(51) Int. Cl.5: **G01N 27/00**, G01N 27/04, G01N 27/22, G01R 27/02, G01N 22/04

(30) Priorité: 20.12.91 FR 9116211

(43) Date de publication de la demande:
08.09.93 Bulletin 93/36

(84) Etats contractants désignés:
BE CH DE ES FR GB IT LI NL

(71) Demandeur: COED S.A.
32, avenue Hoche, ZI SE Henri Farman
F-51100 Reims(FR)

(72) Inventeur: Verheecke, Eric
270, rue de Cernay
F-51100 Reims(FR)

(74) Mandataire: Lepage, Jean-Pierre
Cabinet Lemoine & Associés 12, Boulevard
de la Liberté
F-59800 Lille (FR)

(54) Procédé et dispositif de mesure de l'humidité relative d'équilibre d'un produit.

(57) Procédé de mesure de l'humidité relative d'équilibre et/ou de l'activité en eau d'un produit pour déterminer notamment son état d'hydratation et définir sa stabilité micro-biologique et/ou physico-chimique.

Selon l'invention, il est caractérisé par le fait que :
- l'on prévoit un transfert et/ou un équilibre de vapeur d'eau entre au moins un produit, au moins un milieu, et au moins un élément sensible d'un capteur,
- l'on génère un champ électromagnétique selon au moins une fréquence définie,
- l'on mesure les variations de l'élément sensible lorsqu'il est soumis à au moins l'une des fréquences du dit champ électromagnétique,
- l'on traite le signal résultant des variations du dit élément sensible et l'on détermine, à partir de ce traitement, l'activité en eau et/ou l'humidité relative d'équilibre des produits.

L'invention a également pour objet un dispositif pour la mise en oeuvre du dit procédé.

Application au domaine de la mesure de l'humidité relative d'équilibre et/ou de l'activité en eau d'un produit notamment alimentaire et/ou agro-alimentaire.

FIG.4

EP 0 558 862 A1

La présente invention a pour objet un procédé de mesure de l'humidité relative d'équilibre d'un produit et/ou de son activité en eau pour déterminer notamment son état d'hydratation et définir sa stanilité microbiologique et/ou physico-chimique ainsi qu'un dispositif pour sa mise en oeuvre.

Elle trouvera son application chaque fois que l'on désire déterminer l'activité en eau d'un produit notamment d'un produit agro-alimentaire afin de pouvoir connaître son comportement durant la conduite d'opérations industrielles telles que par exemple la récolte, le séchage, la transformation, le stockage et le conditionnement.

La valeur de l'activité en eau (activité of water ou Aw) est déterminée par le quotient de la pression de vapeur d'eau à la température T du produit et la pression partielle de vapeur d'eau mise à la même température T.

Cette valeur est définie par la formule :

$$Aw = \frac{Pression\ du\ produit}{Pression\ en\ vapeur\ d'eau} \quad et\ elle\ varie\ de\ 0\ à\ 1.$$

Il existe au niveau moléculaire des liaisons entre l'eau et les constituants d'un produit notamment pour les produits alimentaires et/ou agro-alimentaires. Il s'agit principalement de liaisons hydrogènes entre les molécules d'eau et les radicaux polaires de molécules biochimiques telles que les protéines, les glucides, les lipides, et/ou d'autres substances organiques.

Dans ces produits, toute l'eau n'est pas disponible comme solvant, une partie de ceux-ci étant liée à des groupements insolubles de sorte qu'elle ne peut être disponible pour des réactions et notamment pour des réactions biochimiques.

On détermine également la teneur en eau qui est définie comme étant la quantité d'eau présente dans un produit constitué de molécules dans lesquelles le noyau d'oxygène et les deux noyaux d'hydrogène sont dans des limites définies correspondant à des distances sensiblement voisines des distances intermoléculaires de celle dans laquelle se trouve le noyau de l'atome d'oxygène et les deux noyaux d'atome d'hydrogène dans la molécule d'eau.

En pratique, nous adopterons la définition de Guilbot suivante :
- "quantité d'eau perdue par la substance que l'on amène en équilibre vraie avec une pression de vapeur d'eau nulle dans des conditions telles que les réactions perturbatrices éventuelles soient évitées.

Si l'on met en équilibre un produit dans une ambiance d'humidité relative donnée, on constate alors une variation de la teneur en eau. De ce fait, il est possible de représenter graphiquement cette relation sous la forme de courbes appelées couramment par l'homme du métier "courbes de sorption".

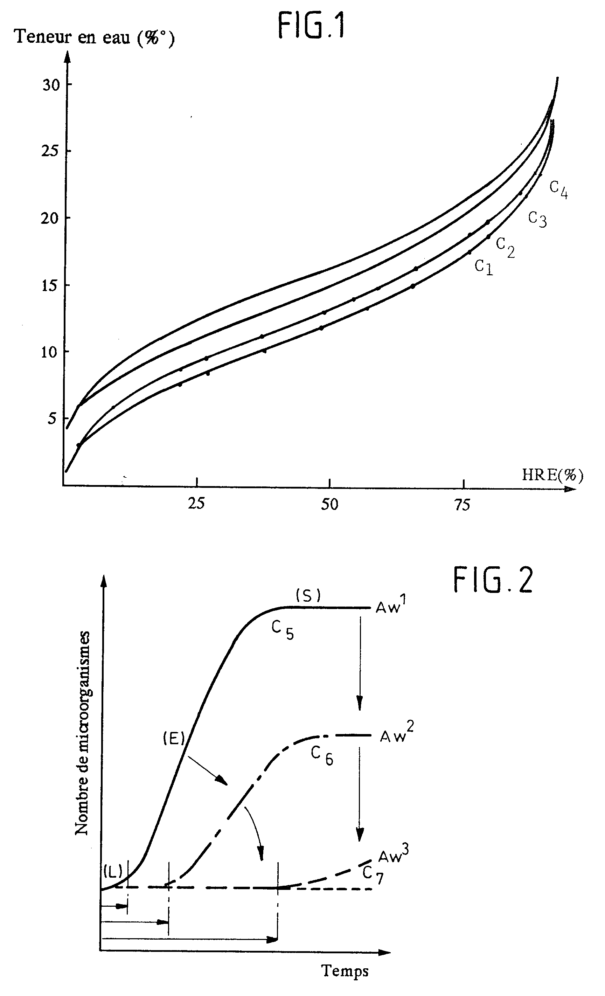

A titre d'exemple, on a représenté à la figure 1, quatre courbes $C_1$, $C_2$, $C_3$, et $C_4$ de sorption.

En abscisse, il est indiqué l'humidité relative de l'air en état d'équilibre thermodynamique avec le produit exprimé en pourcentage, (0 % représentant un air parfaitement sec et 100 %, correspondant à une atmosphère saturée en vapeur d'eau).

En ordonnée, il est indiqué la teneur en eau du produit en pourcentage de poids d'eau par rapport au poids de produit humide.

La courbe $C_1$ représente la sorption du maïs (hydratation), à une température $T_1$ de 20°C et la courbe $C_2$ illustre la désorption (déshydratation) du maïs à la même température $T_1$.

La courbe $C_3$ illustre la sorption du maïs à une température $T_2$ supérieure à la température $T_1$ de 20 °C et la courbe $C_4$ la désorption du maïs à cette même température.

On voit que l'équilibre entre le produit et l'atmosphère environnant comporte un facteur d'hystéréris puisque les courbes $C_1$ et $C_2$ respectivement $C_3$ et $C_4$ ne sont pas superposées. Par ailleurs, on voit qu'un accroissement de la température entraîne généralement un accroissement de l'humidité relative d'équilibre à teneur en eau égale.

L'effet de la température génère des modifications du comportement intermoléculaire au sein du produit dont va dépendre l'ensemble de ces constituants et, de ce fait, la pression partielle va varier en fonction notamment de la constitution moléculaire du dit produit.

L'eau joue un rôle chimique important dans la stabilité du produit en constituant en outre l'un des solvants des réactions s'effectuant au sein de celui-ci.

C'est ainsi, que l'eau peut intervenir à différents niveaux de réactions et, notamment :
- directement comme réactif dans des phénomènes d'hydrolyse,
- comme produit de réaction notamment au titre de réaction de Maillard,
- comme activateur et inhibiteur de certaines réactions enzymatiques,

2

- comme catalyseur ou inhibiteur du développement des micro-organismes.

De ce fait, l'isotherme de sorption est un moyen privilégié pour connaître la répartition et l'intensité des liaisons de l'eau ainsi que la disponibilité fonctionnelle de celle-ci dans les substances biochimiques.

C'est une information qui caractérise la quantité d'eau libre dans le produit et, de ce fait, la coubre de sorption permet de prévoir et de connaître la stabilité du dit produit.

Industriellement, une telle connaissance de l'activité en eau du produit est une information intéressante.

C'est ainsi que la conservation du produit va dépendre non pas de sa teneur en eau mais de la quantité d'eau disponible pour le développement des micro-organismes, moisissures, levures et bactéries comme cela est plus particulièrement illustré à la figure 2.

En se référant à cette figure, on a représenté graphiquement trois courbes $C_5$, $C_6$, et $C_7$ de croissance d'un micro-organisme en fonction de l'activité en eau du milieu.

Chacune de ces trois courbes $C_5$, $C_6$, et $C_7$ présente trois phases distinctes à savoir une phase L de latence, une phase E exponnentielle et une phase S de saturation représentant le nombre et la croissance d'un micro-organisme dan sun milieu.

A partir de la courbe de croissance d'une espèce obtenue à une activité en eau optimale (courbe $C_5$), on observe pour une activité en eau plus réduite dans le milieu réactionnaire (courbes $C_6$ et $C_7$) une augmentation du temps de la phase de latence L et une diminution de la vitesse de croissance des micro-organismes qui se manifestent au niveau de la phase exponentielle E.

On remarque également une diminution du nombre maximum de germes obtenus en phase stationnaire S.

Industriellement, cette mesure de l'activité en eau Aw permet donc de prévoir le comportement du produit notamment pour sa conservation.

La conservation des produits dépend non seulement de la teneur en eau globale du dit produit mais également de la quantité d'eau disponible pour le développement de micro-organismes. Il en résulte que la connaissance de l'activité en eau Aw permet de quantifier en outre les risques de développement microbien et de prévenir les fermentations éventuellement non désirées.

De même, au cours d'une opération de séchage, pour obtenir la conservation dans le temps de nombreux produits, il est nécessaire de connaître l'activité en eau de ces produits.

En effet, cette opération de séchage consiste à créer un déséquilibre entre la pression de l'eau en surface du produit et la pression de l'air ambiant. Elle permet également de faire migrer l'eau du produit de l'intérieur vers l'extérieur de celui-ci pour obtenir son évaporation.

Les pressions de vapeur d'eau étant différentes entre l'eau libre et l'eau liée, l'énergie nécessaire pour obtenir le séchage et éliminer l'eau présente dans le produit va donc être croissante au fur et à mesure que l'activité en eau diminue.

Il en résulte que le contrôle de l'activité en eau permet de minimiser l'élimination d'eau liée qui demande une plus grande énergie pour obtenir son évaporation. On accroît ainsi le bilan énergétique des opérations de séchage tout en évitant des réactions parasitaires non désirées telles que des oxydations ou des brunissements enzymatiques.

Un autre domaine dans lequel la connaissance de l'activité en eau est nécessaire est celui du conditionnement d'un produit.

Notamment, lorsqu'il s'agit de produits alimentaires ou agro-alimentaires, cette opération de conditionnement doit permettre de conserver les qualités du produit le plus longtemps possible en utilisant par exemple des couches barrières ou d'enrobage.

Pour cela, dans de nombreuses applications, on utilise des films notamment d'une matière plastique, plus ou moins perméable a l'eau. Il est donc important que la quantité du produit, que ce type de film puisse maîtriser dans le temps les phénomènes suivants :
- ne pas provoquer un dessèchement du produit par l'abaissement de la quantité en eau,
- réguler la variation de l'humidité relative de la couche limite entre le produit et le film,
- protéger le produit des variations d'humidité relative à l'extérieur de l'emballage,
- protéger des salissures,
- bloquer les migrations des solvants extérieurs.

Ainsi, afin de déterminer le film le mieux adapté en fonction en outre du type de produit et/ou de sa destination, la connaissance de l'activité en eau du dit produit est une donnée importante qui permet d'obtenir le résultat souhaité.

Pour déterminer l'activité en eau d'un produit, et mesurer l'humidité relative d'équilibre du dit produit, on connaît actuellement différentes techniques.

C'est ainsi, que l'on connaît pour mesurer l'humidité relative ou l'activite en eau Aw en milieu industriel sur des produits pulvérulents ou granuleux, des moyens mettant en oeuvre un matériau absorbant ou

3

désorbant en contact avec l'atmosphère. Ces moyens mesurent des variations de paramètres résultant de la quantité d'eau absorbée ou désorbée. Il s'agit par exemple de mesures basées sur la détermination de variations de paramètres électriques telles que des variations de coefficients dites électriques en fonction de la quantité d'eau absorbée ou désorbée par le produit.

Ces techniques présentent de nombreux inconvénients et, celui de nécessiter un étalonnage spécifique à chaque produit pour déterminer le résultat désiré.

Ils sont par ailleurs en pratique d'un emploi très délicat, d'un coût élevé et offrent rarement la précision désirée à cause notamment des courbes de sorption variables en fonction du produit mesuré.

On connaît également un capteur d'humidité relative d'équilibre qui comprend un corps définissant une cavité dans laquelle se trouve un élément sensible à l'humidité avec une languette isolante. Un élément sensible à température et une membrane apte à laisser passer la vapeur sont également prévus tout en constituant une barrière aux liquides.

La détermination de la vapeur de l'humidité relative d'équilibre et de l'activité en eau du milieu ainsi que la température sont obtenues grâce à la fréquence de résonnance des éléments sensibles.

Un inconvénient de ce capteur réside dans le fait qu'il ne permet pas d'obtenir une bonne précision des valeurs mesurées en outre sur site industriel en raison notamment de la sensibilité des éléments sensibles de ce capteur aux variations de précision. En effet, actuellement, on obtient une précision très faible ce qui est loin d'être satisfaisant pour déterminer avec précision l'activité en eau du produit ainsi que son humidité relative d'équilibre.

Or, cette limitation d'utilisation industrielle pose de nombreux problèmes puisqu'il est quelque fois nécessaire de déterminer l'activité en eau Aw du produit dans des lieux où la pression varie et fluctue de manière importante.

Un autre inconvénient de ce capteur réside dans le fait qu'il ne permet pas d'obtenir une répétabilité suffisante sur les mesures effectuées. Cette insuffisance de répétabilité de la mesure pose de nombreux problèmes industriels puisque l'on doit généralement déterminer avec précision un nombre de fois élevé l'activité en eau Aw du produit notamment sur des chaînes de fabrication.

Enfin, il faut également noter que de tels capteurs doivent être étalonnés au moyen de sels de référence tels que par exemple des sels de chlorure de lithium dont on doit connaître avec précision la dilution afin d'obtenir des mesures correctes.

Une telle dilution à saturation des sels de chlorure de lithium est souvent délicate à obtenir avec précision ce qui est une source d'erreurs car il est extrêmement difficile de vérifier chimiquement sa concentration avec précision notamment lorsqu'ils sont fortement dilués.

Par ailleurs, le chlorure de lithium est un sel contenant un élément qui présente une certaine toxicité chimique ce qui nécessite de le manipuler et de l'utiliser avec précaution.

De tels capteurs présentent enfin l'inconvénient d'être généralement d'un coût élevé car ils nécessitent la mise en place et l'utilisation de moyens électroniques de traitement de l'information complexe et fragile.

La présente invention a pour but de remédier aux inconvénients des dispositifs actuellement connus en fournissant un procédé et un dispositif de mesure de l'humidité relative d'équilibre et/ou de l'activité en eau d'un produit qui permette d'obtenir une détermination précise et rapide de la valeur de l'activité en eau Aw de ce produit quelle que soit sa nature et quels que soient les conditions dans lesquelles est effectuée la mesure.

Un autre but du procédé de mesure d'humidité relative d'équilibre du produit selon l'invention réside dans le fait qu'il est simple à mettre en oeuvre et qu'il permet, grâce à une immersion partielle du capteur à l'intérieur du produit, une mesure directe de l'activité en eau Aw du produit quelle que soit la phase dans laquelle il se trouve (solide, liquide, pulvérulente ou granuleuse, etc....).

Un autre but de ce procédé et du dispositif conforme à l'invention réside dans le fait qu'il permet d'obtenir rapidement les courbes de sorption du produit ainsi qu'une mesure de l'activité en eau du produit Aw de celui-ci en continu avec éventuellement, un enregistrement des valeurs mesurées. On peut ainsi suivre l'évolution de l'activité en eau du produit au cours des réactions ce qui accroît les capacités d'utilisation.

Un autre avantage de dispositif conforme à l'invention réside dans le fait qu'il peut être fabriqué sous différents modes de réalisation adaptés en fonction d'applications spécifiques. C'est ainsi qu'il peut être conçu pour une utilisation en laboratoire, ou bien sur site industriel.

Un autre avantage du dispositif conforme à l'invention réside dans le fait qu'il est d'une conception simple et qu'il met en oeuvre des moyens électroniques de traitement de l'information permettant de traiter rapidement les données et d'obtenir des résultats fiables.

Un autre avantage du dispositif de l'invention réside dans le fait que de par sa conception, il présente un étalonnage et une précision suffisante pour être directement utilisé sur site industriel tout en pouvant être également réglé pour accroître sa précision notamment en fonction des besoins et/ou des applications.

Un autre but de la présente invention est que ce dispositif peut être conçu pour être adapté en fonction de son utilisation par exemple, pour mesurer une plage de températures ou une plage d'activités en eau du produit et/ou également selon la phase dans laquelle se trouve le produit.

Un autre avantage du dispositif de l'invention réside dans le fait qu'il est miniaturisé pour pouvoir être facilement utilisé sur site industriel notamment dans des chaînes de fabrication de produits alimentaires et/ou agro-alimentaires.

Un autre but du dispositif conforme à la présente invention réside dans le fait que l'on peut facilement interchanger les éléments sensibles permettant la détermination de l'activité en eau Aw et/ou de l'humidité relative du produit en fonction des besoins, ce qui accroît les capacités d'utilisation.

Un autre but du dispositif conforme à l'invention réside également dans le fait qu'il peut être utilisé seul ou en association avec d'autres capteurs, ce qui permet également d'augmenter ses capacités d'utilisation notamment sur une chaîne de production pour contrôler l'évolution d'humidité relative d'équilibre et/ou de l'activité en eau Aw du produit au cours du processus industriel.

D'autres buts et avantages de la présente invention apparaîtront au cours de la description qui va suivre qui n'est donnée qu'à titre indicatif et qui n'a pas pour but de la limiter.

A cette fin, le procédé de mesure de l'humidité relative d'équilibre et/ou de l'activité en eau du produit est caractérisé par le fait que :
- l'on prévoit un transfert et/ou un équilibre de vapeur d'eau entre au moins un produit, au moins un milieu et au moins un élément sensible,
- l'on génére un champ électromagnétique selon au moins une fréquence définie,
- l'on mesure les variations de l'élément sensible lorsqu'il est soumis à au moins l'une des fréquences du dit champ électromagnétique,
- l'on traite le signal résultant des variations din dit élément sensible et l'on détermine à partir de ce traitement, l'activité en eau et/ou l'humidité relative d'équilibre des produits.

L'invention a également pour objet un dispositif pour la mise en oeuvre du procédé qui est caractérisé par le fait qu'il comprend :
- des moyens de transfert et/ou d'équilibre de vapeur d'eau entre au moins un produit, au moins un milieu et au moins un élément sensible,
- des moyens pour générer un champ électromagnétique selon au moins une fréquence définie,
- des moyens pour mesurer les variations de l'élément sensible lorsqu'il est soumis à au moins l'une des fréquences du dit champ électromagnétique,
- des moyens pour traiter le signal résultant des variations du dit élément sensible et des moyens pour déterminer, à partir de ce traitement, l'activité en eau et/ou l'humidité relative du dit produit.

L'invention sera bien comprise à la lecture de la description suivante accompagnée des dessins en annexe parmi lesquels :
- la figure 1 est une vue qui illustre un ensemble de courbe de sorption d'un produit alimentaire tel que du maïs à une température $T_1$ de 20°C et à une température $T_2$ supérieure à $T_1$,
- la figure 2 est une vue qui illustre un ensemble de coubre qui montre l'évolution d'un micro-organisme en fonction de la teneur en eau du produit,
- la figure 3 est une vue qui représente schématiquement un capteur conforme à l'invention,
- la figure 4 est une vue en coupe qui illustre un dispositif conforme à l'invention,
- la figure 5 est une vue de face similaire à la figure 4 qui illustre un dispositif conforme à l'invention,
- la figure 6 est une vue d'un schéma bloc d'un dispositif conforme à l'invention,
- la figure 7 est une vue schématique d'un dispositif électronique de mesure permettant d'effectuer la détermination de l'activité en eau ou de l'humidité relative aux produits conformément à l'invention,
- la figure 8 est une vue schématique qui illustre l'architecture des moyens calculateurs mis en oeuvre dans la présente invention,
- la figure 9 est une vue schématique qui illustre un algorythme de traitement de la température mis en oeuvre dans la présente invention,
- la figure 10 est une vue schématique qui illustre un algorythme de traitement permettant de déterminer l'activité en eau du produit conformémement à l'invention,
- la figure 11 est une vue schématique qui illustre l'algorythme d'étalonnage et de vérification des mesures conformément à l'invention,

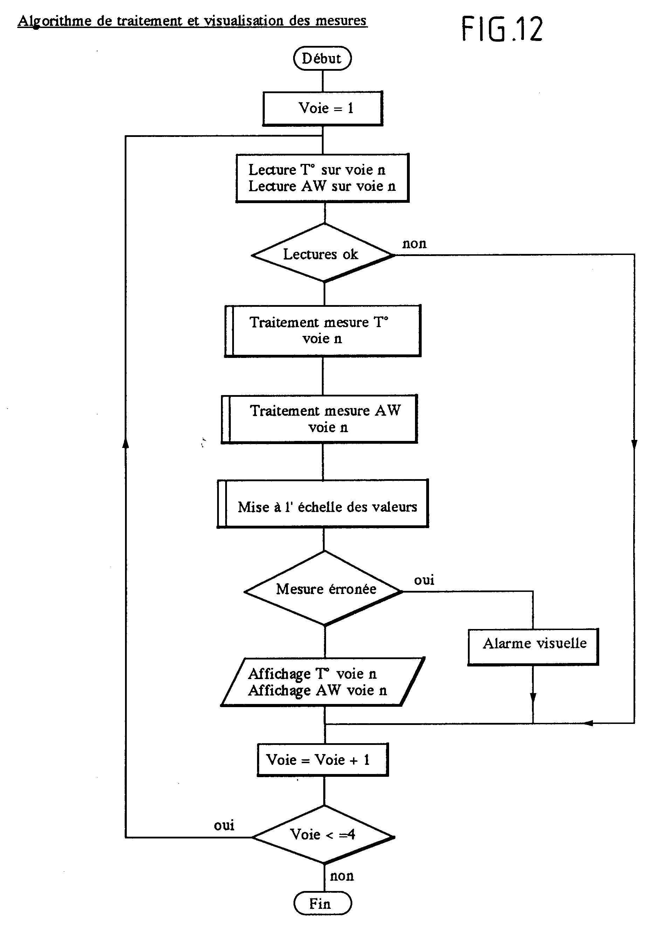

- la figure 12 est une vue schématique qui illustre l'algorythme de traitement et de visualisation des mesures selon l'invention,
- la figure 13 est une vue schématique qui illustre l'algorythme de communication entre des moyens calculateurs et des moyens de traitement de l'information vus du côté du calculateur,

- la figure 14 est une vue schématique qui illustre l'algorythme de communication entre les moyens calculateurs et les moyens de traitement de l'information vus du côté de ces moyens de traitement de l'information,

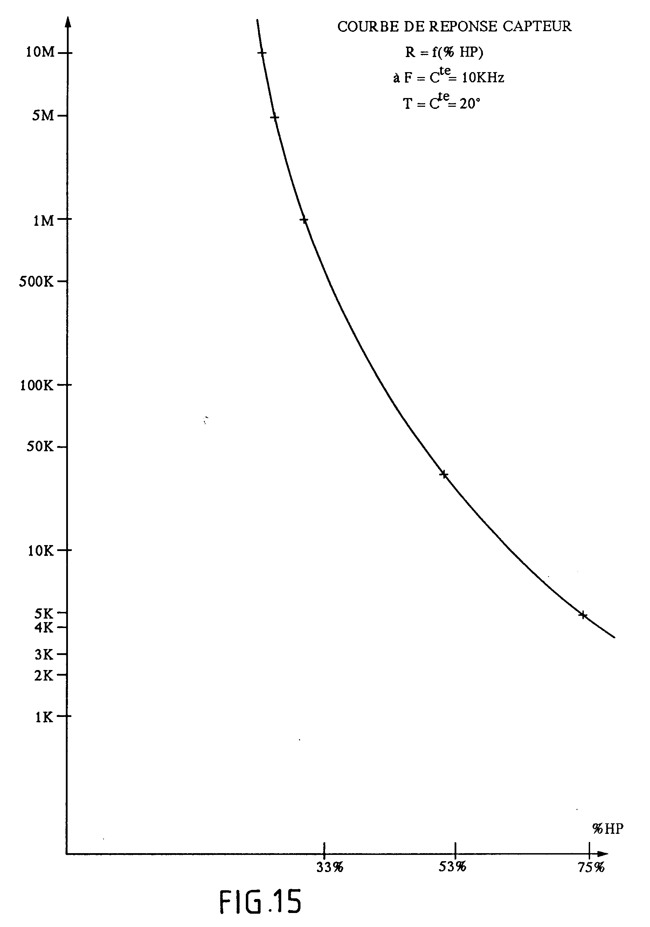

- la figure 15 est une courbe qui représente la variation d'humidité relative à température constante à partir d'une fréquence du champ électromagnétique de 10 kHz.

La présente invention a pour objet un procédé de mesure de l'activité en eau et/ou de l'humidité relative d'équilibre d'un produit ainsi qu'un dispositif pour sa mise en oeuvre. Elle trouvera son application avantageusement dans la mesure d'humidité relative et/ou d'activité en eau et de teneur en eau dans tous types de produits solides, liquides ou gazeux tels que par exemple des produits alimentaires et/ou agro-alimentaires.

On peut par exemple citer, les produits agricoles tels que :
- les engrais, les céréales, les fourrages, les épices, les tabacs,
- les produits agro-alimentaires tels que les aliments pour bétails et animaux domestiques, les aliments secs, biscuiteries, poudres de lait et de flocons de pommes de terre, etc...,
- les produits pharmaceutiques secs sous forme de poudres ou de comprimés,
- les produits tels que des matières plastiques et/ou des matériaux de construction par exemple du plâtre ou du ciment.

En se référant tout d'abord à la figure 1, on voit que le capteur 1 de mesure d'humidité relative et/ou de la teneur en eau Aw conforme à l'invention comporte un corps 2 constitué en une matière représentant des propriétés de structure, de composition et de résistance compatibles avec les utilisations du dit capteur.

En outre, pour une application du capteur à la mesure de l'humidité relative d'équilibre et/ou de la teneur en eau Aw d'un produit alimentaire et/ou agro-alimentaire, on choisit de préférence un corps 2 réalisé en acier inoxyable ou en tout autre matériau qui répond aux normes d'hygiène imposées pour de tels produits.

Ce corps 2 est ici de forme cylindrique et il présente des dimensions suffisamment réduites pour permettre son utilisation aisée sur site industriel dans une chaîne de production et/ou en laboratoire.

En outre, à titre d'exemple, ce corps 2 présente par exemple un diamètre intérieur de 5 micro-millimètres et d'un diamètre extérieur de 9 micro-millimètres.

A l'intérieur de ce corps 2, est fixé, par des points de soudure, un circuit imprimé 3 sur lequel est associé notamment un élément sensible 4. Cet élément sensible 4 est connecté avec l'extérieur du dit corps par l'intermédiaire de fils électriques et notamment, par l'intermédiaire de deux fils électriques blindés pour permettre la transmission des informations sur une mesure d'une plage d'acticités en eau Aw et/ou d'humidité relative du produit, et par l'intermédiaire de quatre fils électriques blindés pour permettre une transmission des informations relatives à la mesure d'une plage de températures. Une sonde 5 est également associée à l'élément sensible 4 pour assurer, une correction en température et permettre ainsi l'obtention d'un résultat de mesure fiable quelles que soient les conditions d'utilisation du dit capteur 1.

Le corps 2 du dit capteur 1 comporte, du côté opposé à l'élément sensible 4, un filetage intérieur destiné à coopérer avec un taraudage ménagé sur un raccord électrique d'une prise d'un câble 6 pour assurer une connexion du dit capteur 1 avec des moyens de traitement des informations et des mesures.

Dans une forme de réalisation, ce câble présente une longueur suffisante pour connecter le dit capteur 1 avec les dits moyens de traitement lorsque ces derniers ne sont pas placés à proximité du corps 2 du capteur 1, ce qui peut être le cas notamment sur site industriel.

Pour assurer l'étanchéité de la connexion entre le capteur 1 et le câble électrique, un embout 7 du genre thermo-rétractable vient se placer sur la partie cylindrique du capteur au niveau du raccordement.

Le corps 2 du capteur 1 comporte également, du côté de l'élément sensible 4, un filetage intérieur destiné à coopérer avec le taraudage d'un écrou 8 fixé notamment par soudure. Le taraudage de cet écrou 8 permet par ailleurs, le passage isolé d'un câble de liaison 9 tel que cela est plus particulièrement illustré à la figure 1 par l'intermédiaire d'un embout 7 du genre thermo-rétractable.

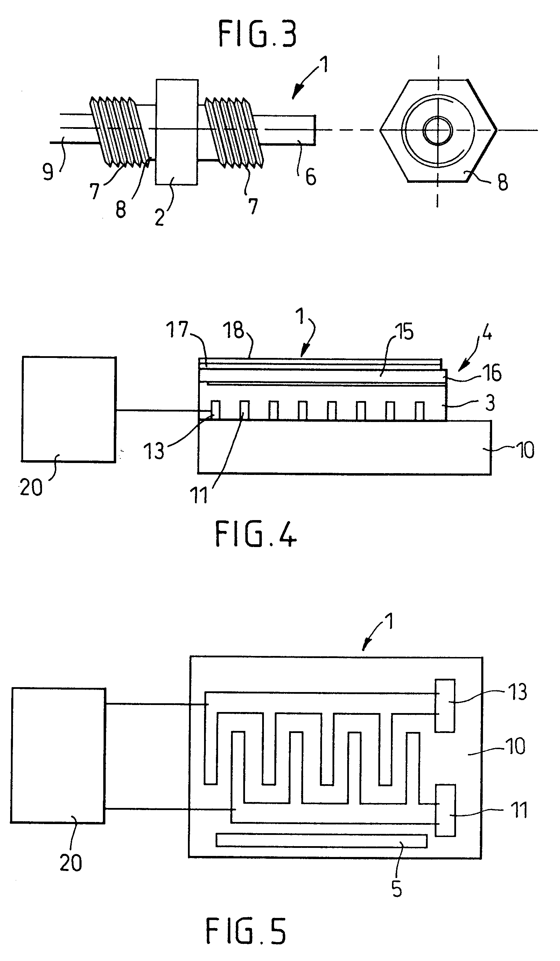

En se référant maintenant plus particulièrement à la figure 4, on voit que l'élément sensible 4 est composé d'un support 10 en matériau isolant électrique résistant et insensible à l'humidité qui présente également des propriétés diélectriques stables dans le temps. Il peut s'agir, par exemple, de résine époxy, de céramique, ou de tout autre matériau approprié.

Des moyens 11 pour transmettre un champ électromagnétique générés par des moyens générateurs par exemple d'un champ électrique, sont fixés sur le support 10. Il s'agit ici, d'un réseau d'électrodes 13 en un matériau conducteur, par exemple en cuivre ou en or, qui sont reliés à des moyens pour traiter le signal tels que ceux qui seront ultérieurement décrits.

Ce réseau d'électrodes 13 sont constitués, par des électrodes en forme de peignes mais bien entendu cette disposition peut être variable en fonction des besoins.

Le champ électrique généré est également ici de préférence un champ alternatif sinusoïdal dont les caractéristiques physiques de fréquences et d'amplitudes sont variables en fonction des applications.

Toutefois, il est tout à fait envisageable, d'avoir recours dans des variantes de réalisation, à d'autres champs électromagnétiques tels que par exemple des champs magnétiques, des champs d'ondes sonores, des champs de rayonnement infrarouge, des micro-ondes, des ultraviolets, des rayonnements gamma, thermolysation de neutrons rapides, etc...

L'élément sensible 4 présente également une couche sensible 15 réalisée à partir de matériau dont les caractéristiques électriques varient d'une manière continue en fonction de la quantité d'eau absorbée par le dit matériau. A titre d'exemple, on peut utiliser des résines de silicone ou bien des électrolytes d'hydrotalcite qui sont des composés du type $Zn_2Al$ (OH) $ClnH_2OR$ est à choisir notamment parmi la liste des atomes suivants : Zn, Cl, Al, etc....

En outre, en ce qui concerne le choix de ce matériau constituant la couche sensible 15, il est choisi pour permettre d'obtenir une mesure de l'humidité relative d'équilibre du produit ou de l'activité en eau de celui-ci la plus correcte possible et il doit, en outre, présenter les caractéristiques suivantes :

- il doit être hydrophile et présenter des caractéristiques de sorption et de désorption de la vapeur d'eau de manière reproductive,
- il doit présenter une isotherme de sorption qui soit aussi grande que possible,
- il doit pouvoir favoriser une rapide pénétration des molécules d'eau et de ce fait, la sorption doit se faire avec un coefficient de diffusion relativement importante,
- il doit être peu sensible aux variations de la température et de ce fait, les isothermes de sorption doivent être aussi proches que possible les unes des autres,
- il doit avoir des isothermes de sorption et/ou de désorption qui doivent présenter une hystéréris limitée,
- il doit pouvoir absorber de manière sélective l'eau par rapport à d'autres fluides notamment sous forme gazeuse,
- il doit être utilisable avec les mêmes isothermes même après être saturés en eau,
- il doit présenter une certaine inertie vis-à-vis des agressions chimiques des gaz contenus dans l'atmosphère ambiante

Par ailleurs, on trouve dans l'élément sensible 4, une lame d'air 16 d'épaisseur variable qui peut être par exemple comprise entre 1 micron et quelques centimères. Cette épaisseur va dépendre en outre de la plage de températures et de la plage d'activités en eau Aw du produit que l'on désire mesurer.

Cette lame d'air 16 peut être constituée dans une forme de réalisation par une quantité d'air emprisonnée à l'intérieur d'un réseau fibreux qui présente des orifices et dont l'épaisseur des fibres détermine celle de la lame d'air 16.

Ces fibres peuvent être réalisées en tout type de matériau présentant des caractéristiques adaptées et notamment, il peut s'agir de fibres en un matériau plastique ou bien encore de fibres métalliques.

Comme le montre également la figure 4, l'élément sensible 4 comporte également une couche barrière 17 pour éviter notamment la pollution de la lame d'air 16 par des agents non désirés. Il peut s'agir par exemple d'une membrane de "Gore-Tex" de porosité déterminée perméable aux fluides tels que par exemple une membrane présentant des pores compris entre 1 à 3 mm.

En outre, cette couche barrière 17 peut être une membrane de protection chimique, bactériologique, ou bien encore une membrane qui présente des propriétés de protection chimiques et/ou bactériologiques et mécaniques.

Pour protéger l'élément sensible 4, une couche de protection 18 contre l'abrasion, les chocs et les contraintes mécaniques est également prévue. Elle est constituée par une couche d'un acier inoxydable percé d'orifices dont le diamètre peut varier de 0,2 mm à 2 microns pour permettre les échanges gazeux entre le produit dont on désire déterminer son humidité relative d'équilibre et/ou son activité en eau et le milieu ambiant.

Par l'intermédiaire de fils électriques, le capteur 1 est relié à un boîtier électronique 20 qui comporte des moyens 21 pour générer un champ électro-magnétique selon au moins une fréquence définie, des moyens 22 pour mesurer les variations de l'élément sensible 4 lorsqu'il est soumis à au moins l'une des fréquences du dit champ électro-magnétique, et des moyens 23 pour traiter le signal résultant des variations du dit élément sensible 4.

Ce boîtier électronique 20 se présente sous la forme d'un parallélépipédique rectangle et il est réalisé dans un matériau tel que par exemple de l'acier inoxydable afin de permettre son utilisation dans des processus mettant en oeuvre des produits destinés à des fins alimentaires. Il présente sur l'une de ses faces, des orifices afin de permettre sa connexion avec des moyens 24 calculateurs.

Les moyens 21, pour générer un champ électro-magnétique sont constitués ici par un générateur d'un type classique et connu de champ électrique à une fréquence variable ou fixe par exemple à 10 kHz. Ce champ émis est un champ sinusoïdale et il est délivré avec une amplitude de 2,5 volts aux bornes du dit capteur 1.

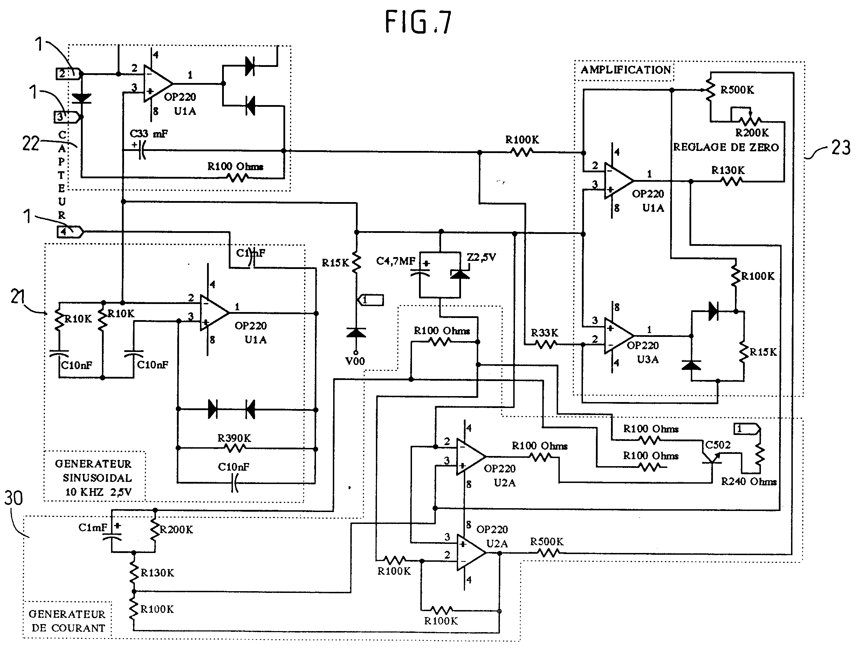

Les moyens 22 pour mesurer les variations de l'élément sensible lorsqu'il est soumis aux dits champs électro-magnétiques sont constitués par un circuit électronique tel que celui qui est plus particulièrement illustré à la figure 7 qui permette en outre de mesurer l'impédance et notamment sa composante résistive du dit capteur sous l'action du dit champ électro-magnétique.

Les moyens 23 pour traiter le signal résultant des variations de l'élément sensible 4 sont constitués par un circuit électronique qui permet de transformer les composantes résistives de l'impédance en un signal normalisé d'intensité en courant de 80 mA. En outre, grâce à ce circuit électronique, on peut calibrer la mesure et ainsi, par exemple, à partir de la correspondance suivante:

- 20 mA correspondant à 1 kilo Ohm, et 4 mA à 10 giga Ohms, réaliser une mesure d'une plage d'activités en eau du produit qui peut varier de 0,1 à 1.

Le boîtier électronique 20 comporte également un dispositif électronique 30 qui permet de délivrer un courant de 4 à 20 mA pour permettre une mesure de la température.

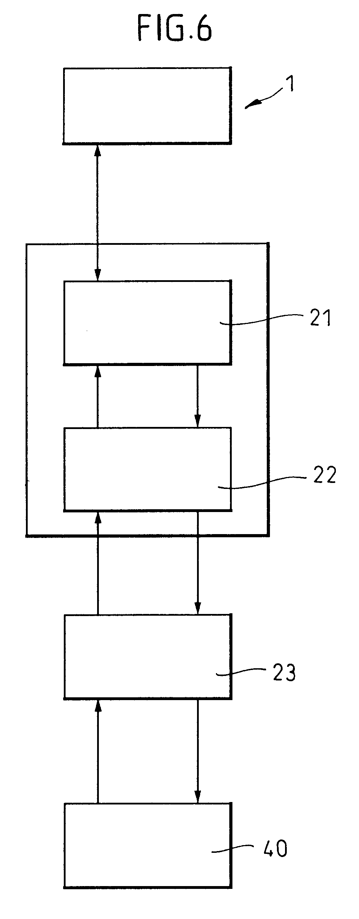

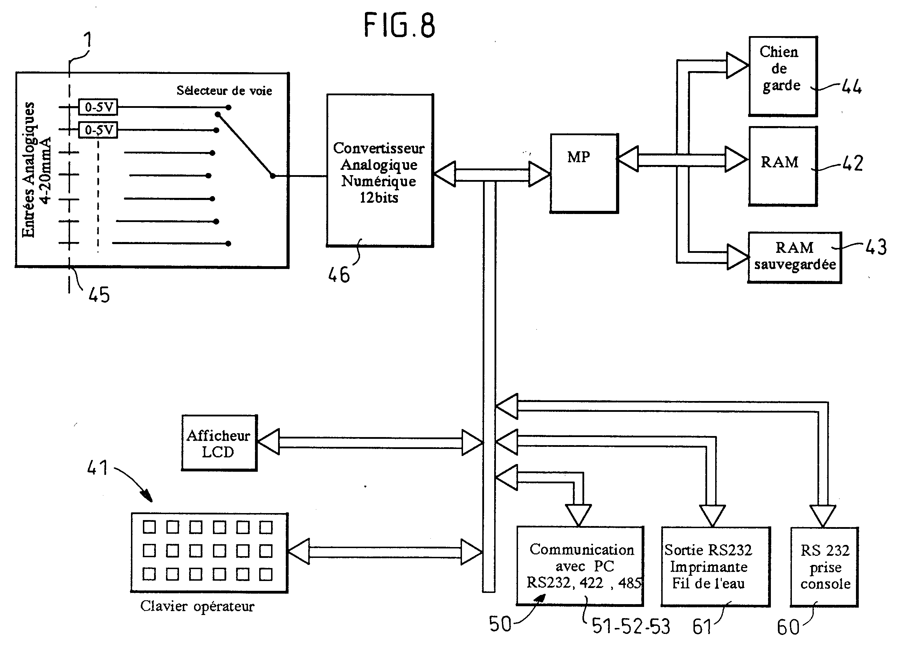

Le dispositif conforme à l'invention tel qu'il est plus particulièrement illustré à la figure 6 comprend par ailleurs, des moyens 40 de traitement d'informations constitués d'un micro-processeur ou d'un micro-contrôleur 41 du type 80-52 vendu par la Société Altel Corporation. En se référant plus particulièrement à la figure 8, on voit l'architecture interne de ce micro-contrôleur 41 qui est constitué de mémoire comprenant par exemple une mémoire de programmation RAM de 42 kilos-octets 42 et une mémoire de sauvegarde RAM également de 42 kilo-octets 43, ainsi qu'une mémoire de sauvegarde 44.

Des câbles de liaison non représentés venant du boîtier 20 et provenant des moyens 22 et 23 pour mesurer et traiter le signal sont prévus pour connecter ceux-ci au micro-processeur 41.

Ce micro-processeur 41 est équipé d'un circuit électronique 45 d'un type classique et connu qui permet de convertir le signal électrique en intensité 4 - 20 mA en un signal de tension 0 - 5 Volts. Ce signal en tension 0 - 5 volts est alors injecté dans une convertisseur 12 bits 46 qui délivre une information au micro-processeur 41 lorsque celui-ci lui demande.

Pour permettre le dialogue avec un opérateur, le micro-processeur 41 est raccordé par des connexions classiques et connues à un afficheur à cristaux liquides 46 par exemple tels que par exemple ceux vendus par la Société TOSHIBA qui présente 4 lignes de 20 caractères chacune permettant ainsi la visualisation nécessaire des étapes de fonctionnement. Le micro-processeur 41 est également raccordé à un clavier 47 de préférence placé sous l'afficheur à cristaux liquides pour permettre, en outre, l'introduction par l'opérateur de données notamment concernant le fonctionnement et l'étalonnage.

Par ailleurs, le micro-processeur 41 peut dialoguer avec un système électronique de communication 50 tel que par exemple un circuit d'interface du type RS222 - RS422 ou RS485 respectivement 51, 52, 53. Dans le cas d'un circuit d'interface du type R485, le micro-processeur 41 peut être programmé pour avoir un dialogue sous des protocoles couramment utilisés dans l'industrie par l'homme du métier tels que ceux plus particulièrement connus sous le nom de "GYBUS".

Le micro-processeur 41 peut également être équipé d'interfaces de communication 53 couramment connues par l'homme du métier sous le nom de "réseau de terrain" ce qui accroît les capacités d'utilisation.

Le micro-processeur 41 dialogue également avec une RAM sauvegardée qui possède les programmes suivants et dont le fonctionnement sera décrit ultérieurement:

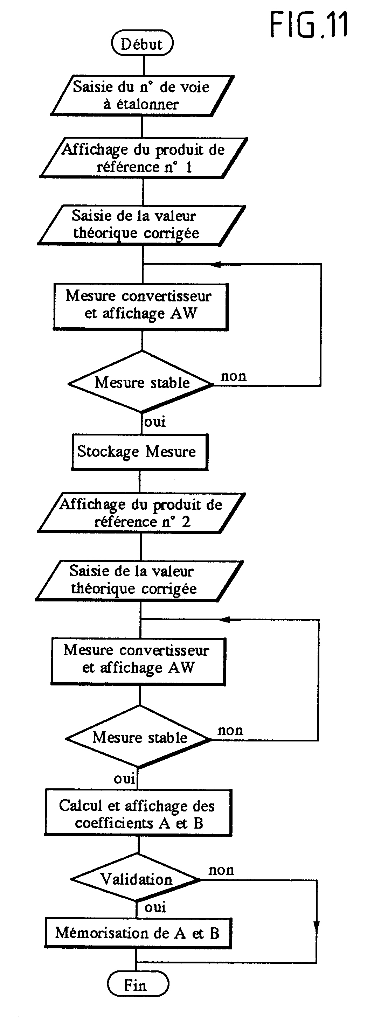

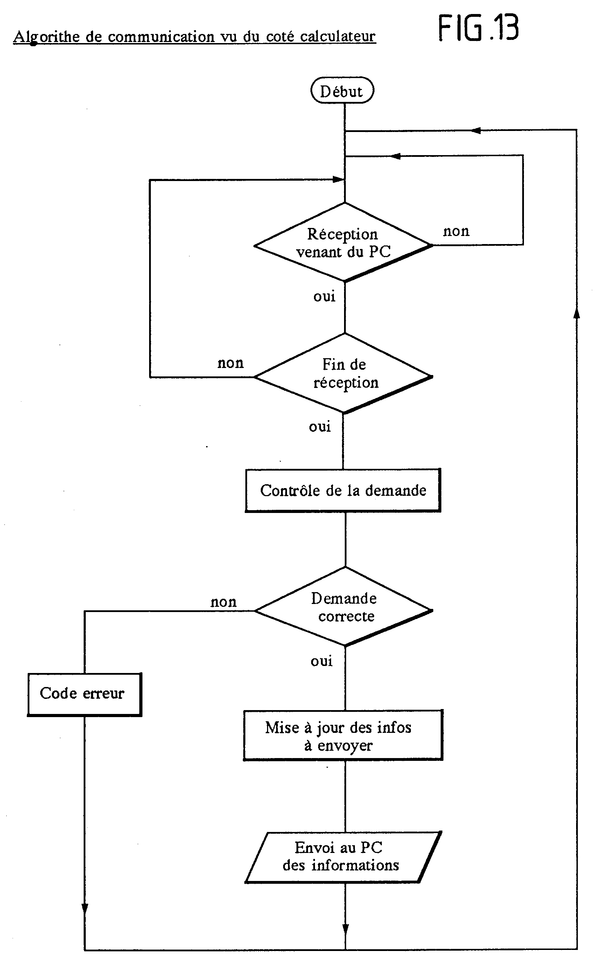

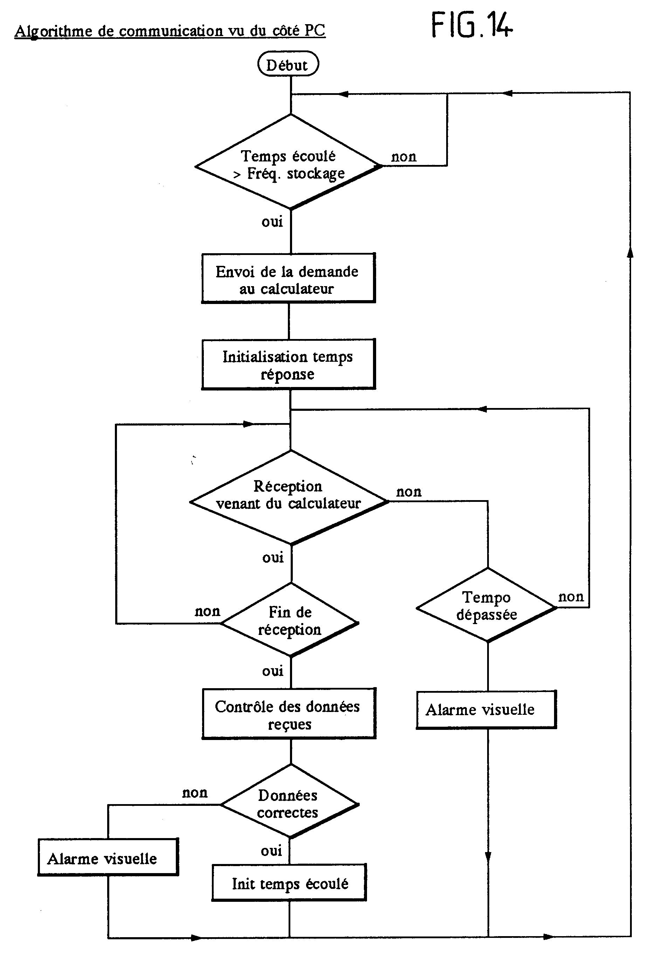

- sous programme général de configuration du calculateur,
- sous programme permettant un dialogue avec des moyens de traitement de l'information et notamment vers un micro-ordinateur tel qu'illustré aux figures 13 et 14,
- sous programme permettant la conversion de la mesure d'impédance en une mesure de l'activité en eau Aw du produit et de la correction de température associé tels qu'illustrés aux figures 8, 9 et 11,
- sous programme permettant le dialogue opérateur-calculateur c'est-à-dire permettant la visualisation et/ou la saisie de données,
- sous programme incluant les courbes de sorption du produit à mesurer permettant l'affichage de la teneur en humidité relative du produit,
- sous programme de communication avec un automate et/ou un ordinateur,
- sous programme d'étalonnage ou de réétalonnage du capteur en fonction des besoins et notamment sur site industriel tels que plus particulièrement illustrés à la figure 11.

Bien entendu, on peut également prévoir d'autres sous-programmes en fonction des besoins et/ou de l'application ainsi que des sauvegardes appropriées de ces différents programmes et sous-programmes et/ou des données de fonctionnement.

Dans une forme de réalisation du dispositif conforme à l'invention, on prévoit de connecter par l'intermédiaire d'une interface de communication compatible les moyens de traitement de l'information 60 à un micro-ordinateur du type PC d'un type classique et connu.

Ce micro-ordinateur PC possède, en outre, au moins un logiciel qui permette d'assurer une visualisation des données de mesures pour faciliter notamment leur dépouillement et/ou leur analyse.

En outre, les logiciels du PC auront pour fonction principale de permettre les mesures, l'affichage et l'analyse des données ainsi obtenues.

Les mesures de ces données pourront être réalisées par l'intermédiaire de paramétrages des informations concernant les cycles de mesure, la lecture des informations dans le calculateur ou bien encore, le stockage sur disque dur des dites informations ainsi qu'une visuasliation sous forme de tableaux et/ou de graphiques des mesures de températures et/ou d'activités en eau du dit produit.

Par ailleurs, ce micro-processeur pourra être connecté par des moyens 61 classiques à une imprimante permettant l'édition des données en continu ou non selon les besoins.

Ces données pourront également posséder un logiciel permettant l'archivage et les stockages sur un support de base de toute ou une partie des cycles de mesure afin de permettre leur utilisation lorsque cela est nécessaire.

Par ailleurs, il pourra également comporter un logiciel ou une partie d'un programme permettant l'analyse des données et notamment une visualisation des cycles de mesure terminés, une édition sur imprimante sous forme de tableaux et/ou de graphiques des dites données ainsi qu'un tri des valeurs d'un cycle de mesures selon différents paramètres tels que notamment en fonction du temps, de la température, de la plage d'activités en eau du produit à déterminer, de la fréquence des champs électro-magnétiques émis, etc....

Il pourra également, être possible, par l'intermédiaire de ce micro-ordinateur d'obtenir une visualisation des mesures à l'écran sous forme de tableaux et/ou de graphismes selon des dispositions facilitant leur lecture.

Il faut également noter que, pour permettre une utilisation du capteur 1 sur site industriel dans des procédés mettant en oeuvre la fabrication de produits alimentaires et/ou agro-alimentaires, ce dit capteur 1 peut présenter des éléments sensibles 4 interchangeables pour répondre à des critères de propreté et de stabilité et de nécessiter d'obtenir des mesures variables en fonction des besoins.

En outre, ce capteur peut également posséder une enveloppe de protection amovible utilisée pendant les cycles de nettoyage de la chaîne industrielle réalisée en un matériau qui résiste à la pression et/ou à la température et/ou aux différents agents chimiques de nettoyage (acide, base, etc...).

Cette protection amovible 70 peut, dans certains cas, être équipée d'un système spécifique de nettoyage du capteur en lui-même et/ou de l'élément sensible pour répondre aux normes de propreté imposées lors de la fabrication de tels produits.

On va maintenant décrire brièvement, le procédé de mesure de l'activité en eau et/ou de l'humidité relative du produit conforme à l'invention.

Pour cela, on prévoit un transfert et/ou un équilibre de vapeur d'eau entre au moins un produit par exemple alimentaire et/ou agro-alimentaire, un milieu tel que l'air ambiant dans lequel l'utilisation sur site industriel ou tout autre milieu dans lequel on désire effectuer la mesure et, au moins un élément sensible 4 de celui qui a été plus particulièrement décrit auparavant.

On génère, un champ électro-magnétique tel que par exemple un champ électrique sinusoïdal alternatif selon au moins une fréquence définie.

On mesure, les variations de l'élément sensible 4 lorsqu'il est soumis à au moins une des fréquences du dit champ électro-magnétique et on traite, le signal résultant des variations du dit élément sensible et on détermine à partir de ce traitement, l'activité en eau et/ou l'humidité relative du dit produit.

L'étape consistant à prévoir un transfert et/ou un équilibre de vapeur d'eau entre le produit, le milieu et l'élément sensible 4 est une étape qui consiste à immerger au moins partiellement le dit capteur 1 conforme à l'invention à l'intérieur du produit afin de pouvoir déterminer son activité en eau et/ou son humidité relative.

L'étape consistant à générer un champ électro-magnétique selon une fréquence définie est une étape qui consiste à soumettre un champ électrique alternatif et sinusoïdal de fréquence définie sur le capteur et plus particulièrement sur l'élément sensible 4.

L'étape qui consiste à mesurer les variations d'éléments sensibles lorsqu'il est soumis à au moins une des fréquences du dit champ électro-magnétique est une étape qui consiste à mesurer l'impédance du capteur sous l'action du champ électrique et plus particulièrement à effectuer une mesure de résistance.

L'étape de traitement du signal résultant des variations du dit élément sensible 4 et de la détermination à partir de ce traitement de l'activité en eau et/ou de l'humidité relative du dit produit est une étape qui met en oeuvre des moyens de traitement de l'information 40 et notamment un calculateur qui présente un certain nombre de programmes appropriés.

Par exemple, un programme principal permet en outre de présenter à l'utilisateur un menu lui permettant d'accéder à différents sous-programmes. Ce programme principal permet notamment de modifier un certain nombre de paramètres de communication entre le calculateur et éventuellement les autres moyens de traitement de l'information tels qu'un ordinateur industriel lors de l'utilisation sur site industriel par exemple.

On va maintenant décrire brièvement un certain nombre de fonctionnalités offertes par ces différents sous-programmes dont l'essentiel est assuré par une programmation appropriée des moyens calculateurs.

Un organigramme précité du logiciel est plus particulièrement illustré ci-dessus.

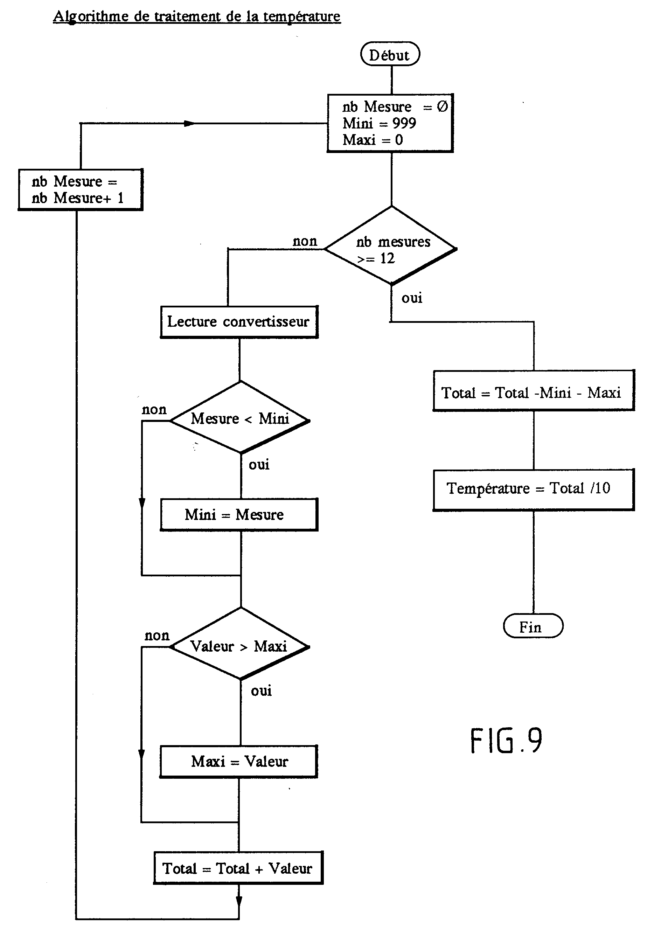

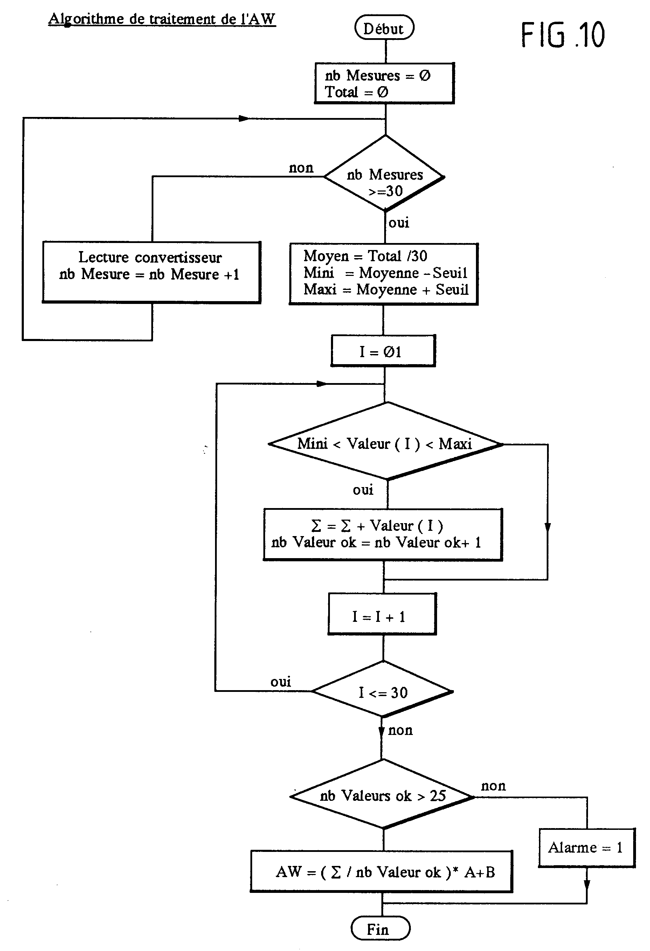

Ce sous-programme permet en outre de configurer les différents paramètres suivants :
- ainsi permettre une présentation et une initialisation des différentes mesures et des capteurs que l'on désire utiliser notamment dans le cas d'utilisations industrielles,
- à saisir et contrôler le fonctionnement des dits capteurs,
- à saisir et à contrôler la température par l'intermédiaire notamment d'un sous-programme tel que celui qui est particulièrement illustré à la figure 9,
- à saisir et à traiter la mesure de l'activité en eau du dit produit par l'intermédiaire d'un sous-programme tel que celui qui est plus particulièrement illustré à la figure 10,
- à étalonner et vérifier les mesures effectuées par l'intermédiaire d'un sous-programme tel que celui qui est plus particulièrement illustré à la figure 10 et notamment, à fixer des valeurs de consigne et des valeurs minimales et maximales pour les programmes, valeurs qui délimitent des intervalles de mesure selon un seuil,
- à effectuer une nouvelle calibration lors du remplacement d'un ou de plusieurs capteurs,
- à fixer une durée de la mesure et/ou d'autres paramètres intervenant dans celle-ci,
- à fixer la présence ou l'absence d'une imprimante pour permettre la visualisation des informations.

Un autre programme dont l'organigramme illustrant les étapes principales de ce logiciel est donné ci-après.

Cet organigramme de sous-programme permet la communication entre les moyens calculateurs et des moyens micro-ordinateurs tels qu'un PC et notamment il permet les échanges d'informations entre ceux calculateur et ceux micro-ordinateur. Les différentes informations pourront être lues ou écrites également dans les mémoires du micro-calculateur.

Chaque trame de communication est composée d'une question et d'une réponse avec un contrôle des informations dans les deux sens. Ce sous-programme consiste:
- à la présentation des informations que l'on désire visualiser sur un écran,
- à une communication entre le calculateur et le PC telle que plus particulièrement illustrée par l'algorythme de communication et de la figure 14 illustrant la communication vue du côté du micro-ordinateur et par l'algorythme de communication vue du côté calculateur comme cela est illustré à la figure 13.

En outre, ce sous-programme permet de traiter des signaux de différents capteurs dont le nombre peut varier en fonction des applications. Dans l'exemple de réalisation illustrée, ce programme permet en outre de calculer les signaux provenant de quatre capteurs différents pour visualiser la mesure de l'activité en eau et/ou de la température du produit.

En option, il pourra également réguler une cellule de mesure qui peut comporter éventuellement d'autres types de capteurs permettant en outre de contrôler d'autres paramètres nécessaires à la fabrication et/ou à la réalisation des produits alimentaires et/ou agro-alimentaires.

Par l'intermédiaire du PC et d'un sous-programme particulier, propre à ce dit PC, les données peuvent être stockées et analysées notamment en temps réel.

Le dit calculateur peut recevoir les informations de 1 à 4 capteurs et en option, il est possible de câbler 32 entrées 24 volts ou bien 16 entrées 5 volts et 40 sorties comme cela est plus particulièrement illustré à la figure 5.

Lors de la mise en tension sous l'appareil, l'affichage demande la sélection du nombre de capteurs à visualiser et, dans une forme de réalisation, la touche F1 permettra la sélection du capteur N° 1, la touche F2 du clavier permettra la sélection du capteur N° 2, la touche F3 celle du capteur N° 3 et enfin la touche F4 celle du capteur N° 4.

L'affichage indique la sélection et celui-ci peut être modifié à tout moment. Le nombre des capteurs est bien entendu validé par pression sur une touche telle que la touche "OUT" du clavier qui permet en outre une mémorisation du nombre de capteurs et la visualisation de l'ensemble des mesures.

L'afficheur visualise également la température et l'Aw de l'ensemble des capteurs qui ont été présélectionnés.

Dans une forme de réalisation, on peut visualiser qu'un seul capteur, la sélection s'effectue alors par pression sur la touche correspondante F1, F2, F3 ou F4.

En outre, en utilisant cette visualisation séparée des capteurs, on peut ainsi suivre, avec une meilleure précision, les variations de l'activité en eau d'un produit dont la mesure est effectuée par ce capteur.

Il est également possible, d'obtenir une impression des dites informations par exemple sur une imprimante qui est câblée par portes parallèles ou par portes en séries soit sur le calculateur, soit sur le PC. Pour cela, il suffit d'appuyer sur le bouton F11 du clavier qui permet d'initialiser l'impression, la période d'impression est sélectionnée par pressions successives sur la touche " + " ou "-" du dit clavier.

En outre, en appuyant sur la touche " + " on incrémente de 10 sec la période d'impression et en appuyant sur la touche "-" du clavier, on diminue de 1 sec la période d'impression.

Il est également possible, d'obtenir une nouvelle impression et de revenir sur la visualisation et de relancer l'impression.

Par l'intermédiaire du sous-programme du PC, il est possible, d'obtenir un étalonnage des coefficients de chaque capteur étant mémorisé automatiquement. Il est donc ainsi possible de mettre à jour les coordonnées des capteurs manuellement au niveau du calculateur par impression sur la touche F2 du clavier.

Il est nécessaire d'effectuer le choix du capteur par les touches présélectionnées F1, F2, F3, F4 afin de déterminer, le capteur que l'on désire utiliser et notamment étalonner.

Ce sous-programme permet en outre la validation de plusieurs coefficients et/ou d'étalonnage d'un ou de plusieurs capteurs.

La fonction "étalonnage" permet de recalibrer séparément les capteurs tout en autorisant la mesure des autres. Cette fonction ne peut être tout à fait utilisée que sur un seul capteur à la fois. Pour ce faire, il faut appuyer sur la touche F9 du clavier permettant la sélection de la fonction "étalonnage", d'appuyer sur la touche plus ou moins pour sélectionner le dit capteur, de valider le numéro du capteur et, de valider l'ajustement de la valeur d'Aw théorique notamment sur un sel de référence au chlorure de sodium et de valider la valeur saisie. Dans ce cas, le calculateur se trouve en mode de mesure. Le capteur en cours d'étalonnage est indiqué par un affichage spécifique au niveau de l'écran de visualisation du micro-ordinateur.

Toutefois, il faut attendre la stabilisation de la mesure pour valider la prise en compte de celui-ci et, pour une mesure et un étalonnage à partir de sel de chlorure de sodium, il faut attendre environ 30 mn.

En appuyant sur la touche F9 du clavier, on resélectionne la fonction "étalonnage" et on valide ainsi la valeur à mesurer.

Le calculateur passe automatiquement au deuxième sel d'étalonnage qui est du chlorure de magnésium.

En appuyant sur la touche " + " ou "-" du clavier, on ajuste la valeur d'Aw théorique sur sel de chlorure de magnésium et, en appuyant sur la touche spécifique du clavier prévu à cet effet, on valide la valeur saisie.

Le calculateur se trouve également de nouveau dans un mode de mesure. Il faut également attendre comme dans le cas d'un étalonnage à partir du chlorure de sodium, un temps de stabilisation pour prendre en compte cette mesure. Ce temps conseillé est d'environ de 60 mn.

En appuyant de nouveau sur la touche F9, on resélectionne la fonction d'étalonnage et on valide ainsi la valeur mesurée.

Les deux points d'étalonnage étant mémorisés, le calculateur, peut ainsi calculer de nouveaux coefficients que l'on peut valider.

Si l'étalonnage n'est pas passé correctement, les coefficients ne sont pas validables. Pour les effacer et conserver les anciennes mesures, il suffit de taper sur la touche "AUTO" du clavier.

## Revendications

1. Procédé de mesure de l'humidité relative d'équilibre et/ou de son activité en eau pour déterminer notamment son état d'hydratation et définir sa stabilité micro-biologique et/ou physico-chimique, caractérisé en ce que :
   - l'on prévoit un transfert et/ou un équilibre de vapeur d'eau entre au moins un produit, au moins un milieu et au moins un élément sensible d'un capteur,
   - l'on génère un champ électromagnétique selon au moins une fréquence définie,

- l'on mesure les variations de l'élément sensible lorsqu'il est soumis à au moins l'une des fréquences du dit champ électromagnétique,
- l'on traite le signal résultant des variations du dit élément sensible et l'on détermine à partir de ce traitement, l'activité en eau et/ou l'humidité relative d'équilibre des produits.

2. Procédé selon la revendication 1, caractérisé en ce que l'on génère un champ électromagnétique du type "champ électrique".

3. Procédé selon la revendication 2, caractérisé en ce que l'on génère un champ électrique alternatif et sinusoïdal selon les caractéristiques physiques de fréquence et d'amplitude déterminées.

4. Procédé selon la revendication 1, caractérisé en ce que l'on mesure l'impédance de l'élément sensible sous l'action du dit champ électromagnétique.

5. Procédé selon la revendication 4, caractérisé en ce que l'on mesure la composante résistive de l'impédance.

6. Procédé selon la revendication 1, caractérisé en ce que l'on immerge au moins partiellement le capteur.

7. Procédé selon la revendication 1, caractérisé en ce que l'on pré-étalonne le capteur selon une précision déterminée en vue de permettre son utilisation directe.

8. Procédé selon la revendication 1, caractérisé en ce que l'on prévoit une correction en température des mesures.

9. Procédé selon la revendication 1, caractérisé en ce que l'on prévoit un étalonnage du dit capteur en fonction de son utilisation.

10. Procédé selon la revendication 1, caractérisé en ce que l'on prévoit une communication avec des moyens de traitement de l'information.

11. Dispositif pour la mise en oeuvre du procédé de mesure de l'humidité relative d'équilibre et/ou de l'activité en eau d'un produit pour déterminer notamment son état d'hydratation et définir sa stabilité micro-biologique et physico-chimique selon la revendication 1, caractérisé en ce qu'il comprend :
- des moyens de transfert et/ou d'équilibre de vapeur d'eau entre au moins un produit, au moins un milieu et au moins un élément sensible (4) d'un capteur (1),
- des moyens (21) pour générer un champ électromagnétique selon au moins une fréquence définie,
- des moyens (22) pour mesurer les variations de l'élément sensible (4) lorsqu'il est soumis à au moins l'une des fréquences du dit champ électromagnétique,
- des moyens (23) pour traiter le signal résultant des variations du dit élément sensible (4) et des moyens (40) pour déterminer à partir de ce traitement l'activité en eau et/ou l'humidité relative du dit produit.

12. Dispositif selon la revendication 11, caractérisé en ce que l'élément sensible (4) du capteur (1) est composé par :
- un support (10) en un matériau isolant électrique résistant et insensible à l'humidité,
- des moyens (11) pour transmettre un champ électromagnétique constitué par au moins une électrode (13),
- une couche sensible (15) réalisée en un matériau dont les caractéristiques électriques varient d'une manière continue en fonction de la quantité d'eau absorbée par le dit matériau,
- une lame d'air (16) de faible épaisseur,
- une couche barrière (17) poreuse pour éviter la pollution de la lame d'air par des agents non désirés,
- une couche de protection (18) poreuse réalisée en un matériau résistant.

**13.** Dispositif selon la revendication 12, caractérisé en ce que la couche sensible (17) est réalisée dans des résines de silicone ou bien dans des électrolytes d'hydrotalcite de formule générale $Zn_2Al$ (OH) $ClnH_2OR$.

**14.** Dispositif selon la revendication 12, caractérisé en ce que la lame d'air (16) est constituée par une quantité d'air emprisonnée dns un réseau fibreux.

**15.** Dispositif selon la revendication 11, caractérisé en ce qu'il comporte des moyens de traitement de l'information (60) tels qu'un micro-ordinateur qui possède en outre des programmes et/ou des logiciels permettant la détermination de la valeur de l'activité en eau et/ou de l'humidité relative d'équilibre du dit produit.

**16.** Dispositif selon la revendication 11, caractérisé en ce que le capteur (1) possède une enveloppe de protection amovible (70).

**17.** Dispositif selon la revendication 11, caractérisé en ce que le capteur (1) possède un corps (2) de forme cylindrique de faible épaisseur.

**18.** Dispositif selon la revendication 11, caractérisé en ce que le corps (2) du capteur (1) possède une sonde (5) pour assurer une correction en température.

**19.** Dispositif selon la revendication 11, caractérisé en ce que le corps (2) du capteur (1) est réalisé dans un matériau compatible avec des normes d'hygiène ou de propreté imposées dans des applications pour la détermination de l'activité en eau et/ou de l'humidité relative d'équilibre de produit alimentaire et/ou agro-alimentaire.

**20.** Dispositif selon la revendication 11, caractérisé en ce qu'il comporte un élément sensible (4) amovible.

# FIG.1

Teneur en eau (%°)

HRE(%)

# FIG.2

Nombre de microorganismes

Temps

## FIG.3

## FIG.4

## FIG.5

# FIG.6

# FIG.7

EP 0 558 862 A1

# FIG.8

Entrées Analogiques 4-20mmA — Sélecteur de voie — 0-5V — 0-5V — 45 — 1

Convertisseur Analogique Numérique 12bits — 46

MP

Chien de garde — 44

RAM — 42

RAM sauvegardée — 43

Afficheur LCD

Clavier opérateur — 41

Communication avec PC RS232, 422, 485 — 50 — 51-52-53

Sortie RS232 Imprimante Fil de l'eau — 61

RS 232 prise console — 60

Algorithme de traitement de la température

```
                              ( Début )
                                  │
                    ┌─────────────────────────┐
       ┌───────────→│ nb Mesure  = Ø          │
       │            │ Mini = 999              │
       │            │ Maxi = 0                │
       │            └─────────────────────────┘
       │                          │
┌──────────────┐                  │
│ nb Mesure =  │            non   ◇ nb mesures
│ nb Mesure+ 1 │    ←─────────────◇ >= 12
└──────────────┘                  ◇
       ↑                          │ oui
       │            ┌────────────────────────┐
       │            │ Lecture convertisseur  │       ┌──────────────────────────┐
       │            └────────────────────────┘       │ Total = Total -Mini - Maxi│
       │                          │                  └──────────────────────────┘
       │              non   ◇ Mesure < Mini                     │
       │            ←────────◇                      ┌──────────────────────────┐
       │                     │ oui                  │ Température = Total /10   │
       │            ┌────────────────┐              └──────────────────────────┘
       │            │ Mini = Mesure  │                          │
       │            └────────────────┘                      ( Fin )
       │                          │
       │              non   ◇ Valeur > Maxi
       │            ←────────◇
       │                     │ oui
       │            ┌────────────────┐
       │            │ Maxi = Valeur  │
       │            └────────────────┘
       │                          │
       │            ┌────────────────────┐
       │            │ Total = Total + Valeur │
       └────────────└────────────────────┘
```

FIG.9

EP 0 558 862 A1

**FIG .10**

Algorithme de traitement de l'AW

( Début )

nb Mesures = Ø
Total = Ø

nb Mesures
>=30

non

oui

Lecture convertisseur
nb Mesure = nb Mesure +1

Moyen = Total /30
Mini = Moyenne – Seuil
Maxi = Moyenne + Seuil

I = Ø1

Mini < Valeur ( I ) < Maxi

oui

$\Sigma = \Sigma$ + Valeur ( I )
nb Valeur ok = nb Valeur ok+ 1

I = I + 1

I <= 30

oui

non

nb Valeurs ok > 25

non

AW = ( $\Sigma$ / nb Valeur ok )* A+B

Alarme = 1

( Fin )

20

# FIG.11

```
                    ( Début )
                         │
              / Saisie du n° de voie /
              /    à étalonner      /
                         │
           / Affichage du produit de /
           /     référence n° 1     /
                         │
              / Saisie de la valeur /
              / théorique corrigée  /
                         │◄─────────────┐
              ┌──────────────────┐      │
              │ Mesure convertisseur │   │
              │  et affichage AW    │   │
              └──────────────────┘      │
                         │              │
                    ◄ Mesure stable ►──non──┘
                         │
                        oui
              ┌──────────────────┐
              │  Stockage Mesure │
              └──────────────────┘
                         │
           / Affichage du produit de /
           /     référence n° 2     /
                         │
              / Saisie de la valeur /
              / théorique corrigée  /
                         │◄─────────────┐
              ┌──────────────────┐      │
              │ Mesure convertisseur │   │
              │  et affichage AW    │   │
              └──────────────────┘      │
                         │              │
                    ◄ Mesure stable ►──non──┘
                         │
                        oui
              ┌──────────────────┐
              │ Calcul et affichage des │
              │  coefficients A et B │
              └──────────────────┘
                         │
                   ◄ Validation ►──non──┐
                         │              │
                        oui             │
              ┌──────────────────┐      │
              │ Mémorisation de A et B │ │
              └──────────────────┘      │
                         │◄─────────────┘
                     ( Fin )
```

21

Algorithme de traitement et visualisation des mesures

FIG.12

```
                    ( Début )
                         |
               ┌─────────────────┐
               │    Voie = 1     │
               └─────────────────┘
                         |
               ┌─────────────────────┐
               │ Lecture T° sur voie n│
               │ Lecture AW sur voie n│
               └─────────────────────┘
                         |
                    ╱‾‾‾‾‾‾‾╲      non
                   ╱ Lectures ok ╲─────────┐
                    ╲_____╱           │
                         |                  │
               ┌─────────────────┐          │
               │ Traitement mesure T°│       │
               │      voie n         │       │
               └─────────────────┘          │
                         |                  │
               ┌─────────────────┐          │
               │ Traitement mesure AW│       │
               │      voie n         │       │
               └─────────────────┘          │
                         |                  │
               ┌────────────────────────┐   │
               │ Mise à l' échelle des valeurs│ │
               └────────────────────────┘   │
                         |                  │
                    ╱‾‾‾‾‾‾‾╲      oui       │
                   ╱ Mesure érronée ╲────────┐│
                    ╲_____╱           ││
                         |          ┌────────────────┐
                ╱────────────────╱  │ Alarme visuelle│
               ╱ Affichage T° voie n╱  └────────────────┘
              ╱ Affichage AW voie n ╱         │
               ────────────────╱              │
                         |                    │
               ┌─────────────────┐            │
               │ Voie = Voie + 1 │            │
               └─────────────────┘            │
                         |                    │
           oui      ╱‾‾‾‾‾‾‾╲
           ┌───────╱ Voie < =4 ╲
           │        ╲_____╱
           │             | non
           │          ( Fin )
```

Algorithe de communication vu du coté calculateur

# FIG.13

Algorithme de communication vu du côté PC

# FIG.14

COURBE DE REPONSE CAPTEUR

$$R = f(\% \ HP)$$

$$\text{à } F = C^{te} = 10KHz$$

$$T = C^{te} = 20°$$

%HP

10M
5M
1M
500K
100K
50K
10K
5K
4K
3K
2K
1K

33%    53%    75%

FIG.15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-4 564 882 (BAXTER ET AL.)<br><br>* le document en entier *<br>--- | 1-7,<br>9-12,<br>15-18 | G01N27/00<br>G01N27/04<br>G01N27/22<br>G01R27/02<br>G01N22/04 |
| X | EP-A-0 054 813 (PHOENIX INTERNATIONAL CORP.)<br>* page 4, ligne 34 - page 5, ligne 19 *<br>--- | 1-7,9-12 | |
| X | EP-A-0 259 012 (NIPPON MINING COMPANY)<br><br>* page 7, ligne 25 - page 8, ligne 42 *<br>--- | 1-12,16,<br>18 | |
| Y | WO-A-8 503 777 (CLAEYS-LUCK)<br><br>* le document en entier *<br>--- | 1-12,<br>15-20 | |
| Y | GB-A-2 194 340 (AGRICULTURAL & FOOD RESEARCH COUNCIL)<br>* abrégé; figure 1 *<br>--- | 1-12,<br>15-20 | |
| A | EP-A-0 426 989 (DORNIER GMBH)<br>* abrégé; figures 1,2 *<br>--- | 1 | **DOMAINES TECHNIQUES RECHERCHES (Int. Cl.5 )**<br><br>G01N<br>G01R |
| A | FR-A-2 203 520 (VAISALA OY)<br>* le document en entier *<br>--- | 1 | |
| A | FR-A-2 356 932 (IBM CORP.)<br>* le document en entier *<br>--- | 1 | |
| A | DE-A-3 937 605 (VDO ADOLF SCHINDLING AG)<br>* le document en entier *<br>--- | 1-12 | |
| A | WO-A-9 112 518 (TEWS ELEKTRONIK)<br>* le document en entier *<br><br>----- | 1-12 | |

Le présent rapport a été établi pour toutes les revendications

| Lieu de la recherche | Date d'achèvement de la recherche | Examinateur |
|---|---|---|
| LA HAYE | 30 JUIN 1993 | KOUZELIS D. |

EPO FORM 1503 03.82 (P0402)